(19) Europäisches Patentamt
European Patent Office
Office européen des brevets

(11) **EP 3 217 541 A1**

(12) **EUROPEAN PATENT APPLICATION**
published in accordance with Art. 153(4) EPC

(43) Date of publication:
**13.09.2017 Bulletin 2017/37**

(51) Int Cl.:
**H02S 50/00** (2014.01)

(21) Application number: **16849925.9**

(22) Date of filing: **15.01.2016**

(86) International application number:
**PCT/CN2016/071007**

(87) International publication number:
**WO 2017/120883 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **UKC Electronics (H.K.) Co. Ltd.**
**Hong Kong 999077 (CN)**

(72) Inventor: **The designation of the inventor has not yet been filed**

(74) Representative: **Betten & Resch**
**Patent- und Rechtsanwälte PartGmbB**
**Maximiliansplatz 14**
**80333 München (DE)**

(54) **METHOD FOR DETERMINING SOLAR MODULE CLEANING TIME POINT AND SOLAR MODULE SYSTEM**

(57) A method for determining a time point to clean a solar cell module is provided. The method comprises the steps of calculating a power generation loss of the solar cell module in a time period due to dust accumulation; converting calculated the power generation loss in the time period due to dust accumulation into a cost of the power generation loss; calculating a total cost of the power generation loss when it is equal to a cost of cleaning through the cost of the power generation loss in the time period; and determining the time point of cleaning by referring to the total cost of the power generation loss.

FIG. 2

calculating a power generation loss of the solar cell module in a time period due to dust accumulation — S101

converting the calculated power generation loss in the time period due to dust accumulation into a cost of power generation loss — S102

calculating a total cost of power generation loss which is equal to a cost of cleaning through the cost of power generation loss in the time period — S103

determining the time point of cleaning from the total cost of power generation loss — S104

EP 3 217 541 A1

**Description**

**FIELD OF THE INVENTION**

The present invention relates to a method for determining the time point of cleaning a solar cell module and a solar cell module system using the same.

**BACKGROUND OF THE INVENTION**

Currently, fossil fuel is our main energy resource and is widely used in providing electricity to human in everyday life. However, as the energy resource of fossil fuel gradually depletes, the climate changes extremely and the eco-system disorders due to the fossil fuel, countries are making efforts on development of alternative energies, such as solar energy, wind energy, geothermal energy and hydro-energy, of which power generation using solar energy attracts the most attention. The amount of solar energy reaching earth's surface for one hour can provide a whole year requirement of energy to humans, and solar energy is an inexhaustible natural resource. Solar power generation has advantages such as that it is never exhausted and can be easily incorporated in a building. Further, as the rapid advancement of semiconductor material in recent years, the photoelectric conversion efficiency of solar energy continues to improve so that the solar cell modules have been widely utilized by consumer generally.

However, the environmental factors strongly affect the power generation efficiency of solar cell module. For example, the climate, season, day and night all affect the amount of insolation. Additionally, the dirt and dust are known as reducing the amount of power generation. Usually, in order to prevent the dirt or dust from reducing the amount of power generation, the solar cell module is cleaned to ensure the efficiency of power generation. However, although the continuous cleaning for the solar cell module can ensure that the solar cell module is clean, the amount of the cost of cleaning will increase and thus lacks economic benefits.

The present inventors have ever provided a solar cell module efficacy monitoring system and the method therefor (Taiwan invention patent publication No. 201350892), which calculates the power generation loss of solar cell module and compares it with the rated output in order to calculate the power loss when actually operating the solar cell module.

Although the present inventors disclosed in the above-mentioned patent application that the power loss $\Delta p$ of the solar cell module during actual operation =the rated output of the solar cell module-(actual generated power of the solar cell module+$\Delta Pd$ (power loss due to dust accumulation)+$\Delta Pt$ (power loss due to operation temperature)+$\Delta Pm$ (power loss due to maximum power point tracking)), said patent application does not mention any effective strategy for dealing with the power loss due to dust accumulation, e.g. by replacing or cleaning.

In addition, the present inventors also provide a method for solar power generation monitoring and a solar power generation monitoring system using said method (Taiwan invention patent publication No. 201414134), which monitors various power losses of solar power generation system and detects any abnormality However, said patent application does not mention any effective strategy for dealing with the power loss due to dust accumulation.

In view of the above problems, the present inventors actively conducted the research and development in order to provide an effective method to avoid the power loss of solar cell module due to dust accumulation, thereby reaping the economic benefits. Through constant trial and efforts, the present inventors finally developed the present invention.

**SUMMARY OF THE INVENTION**

According to a first aspect of the present invention, a method for determining a time point to clean a solar cell module is provided. The method comprises the steps of: calculating a power generation loss of the solar cell module in a time period due to dust accumulation; converting the calculated power generation loss in the time period due to dust accumulation into a cost of the power generation loss; calculating a total cost of the power generation loss when it is equal to a cost of cleaning through the cost of the power generation loss in the time period; and determining the time point of cleaning by referring to the total cost of the power generation loss.

According to a second aspect of the present invention, a method for determining a time point to clean a solar cell module is provided. The method comprises the steps of: calculating an accumulative power generation loss of the solar cell module due to dust accumulation; converting the calculated accumulative power generation loss due to dust accumulation into a cost of the power generation loss; instantaneously comparing the cost of the power generation loss with a cost of cleaning, wherein if the cost of the power generation loss is less than the cost of cleaning, the method will be back to the step of calculating the accumulative power generation loss of the solar cell module due to dust accumulation, and wherein if the cost of the power generation loss is equal to the cost of cleaning, the next step will be proceeded; and making a notification of cleaning when the cost of the power generation loss is equal to the cost of cleaning.

According to a third aspect of the present invention, a solar cell module system is provided. The solar cell module system comprises: a reference module which is a solar power generation module and its surface maintains in a clean condition; an evaluation module which is a solar power generation module and is covered by dust in a real environment; a data collecting element which is configured to collect the data relevant to the power generation loss of the evaluation module due to dust accumulation, calculate the power generation loss, and make a calculation of a time point of cleaning; and a display element which is configured to display the time point of cleaning calculated by the data collecting element; wherein the solar cell module system uses the method described above for determining the time point to clean the solar cell module to determine the time point of cleaning.

According to the method of the present invention for determining the time point to clean the solar cell module and the solar cell module system of the present invention using said method, the power loss of the solar cell module due to dust accumulation could be effectively avoided and thus the economic benefits could be reaped.

## BRIEF DESCRIPTION OF THE DRAWINGS

FIG. 1 is a diagram illustrating the calculation method according to a first embodiment of the present invention for determining the time point to clean the solar cell module;

FIG. 2 is a flowchart showing the method according a first embodiment for determining the time point to clean the solar cell module;

FIG. 3 is a diagram illustrating the calculation method according to a second embodiment of the present invention for determining the time point to clean the solar cell module;

FIG. 4 is a flowchart showing the method according the second embodiment for determining the time point to clean the solar cell module; and

FIG. 5 is a block diagram showing the solar cell module system according to the present invention using the method for determining the time point to clean the solar cell module.

## DETAILED DESCRIPTION OF THE INVENTION

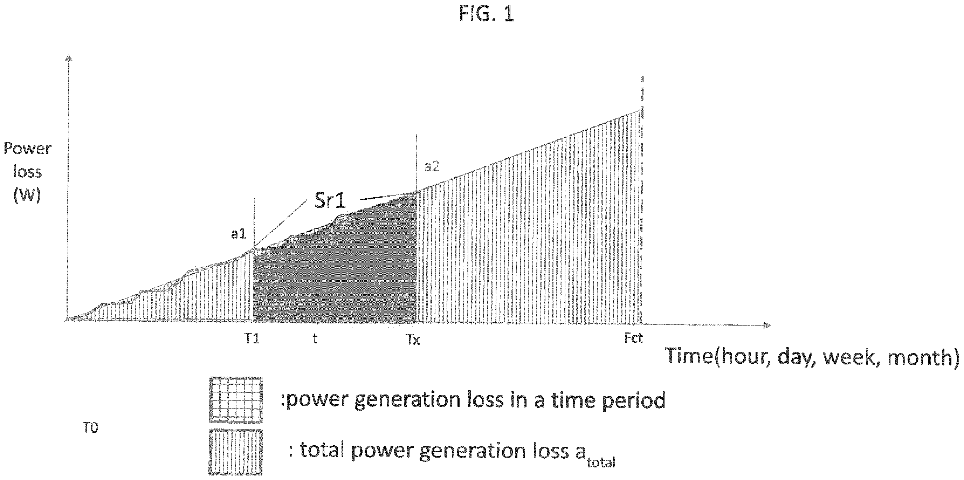

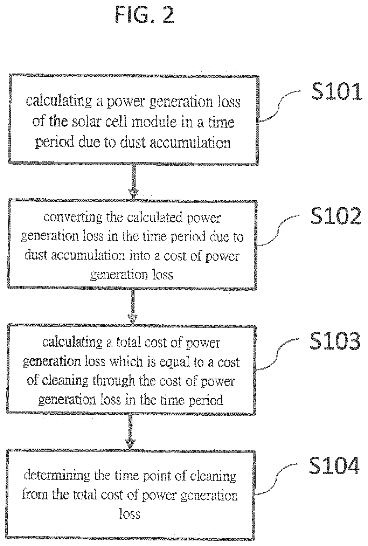

With reference to FIG. 1 and FIG. 2, a method for determining the time point to clean a solar cell module according to the first embodiment of the present invention will be described below. FIG. 1 is a diagram illustrating the calculation method according to the first embodiment of the present invention for determining the time point to clean the solar cell module. The horizontal axis of FIG. 1 represents time and the vertical axis of FIG. 1 represents power loss. FIG. 2 is a flowchart showing the method according the first embodiment for determining the time point to clean the solar cell module.

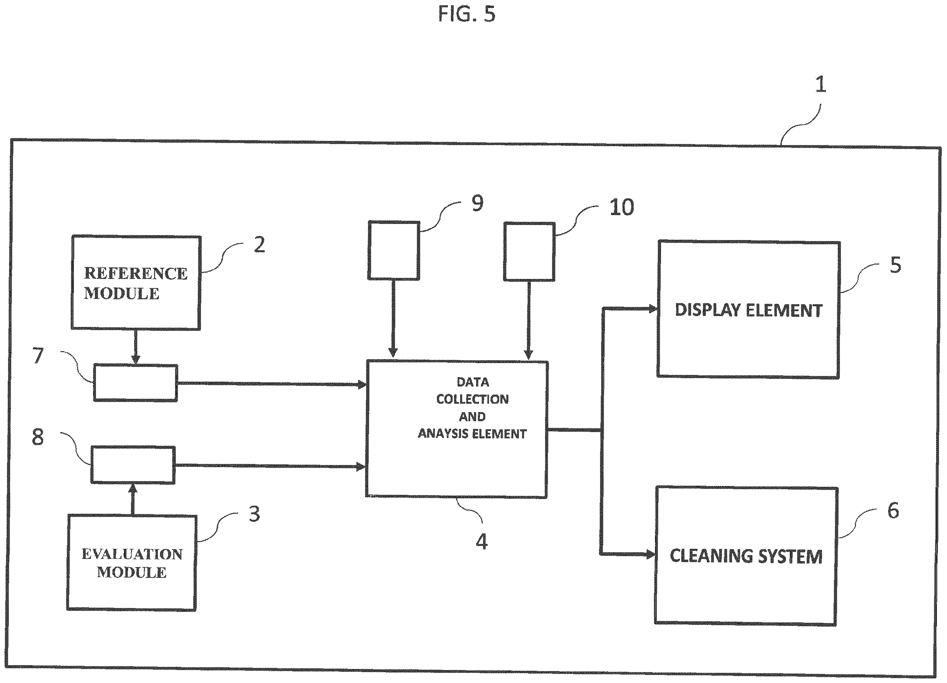

First referring to FIG. 5, a solar cell module system 1 using the method according to the present invention for determining the time point to clean the solar cell module is described. The solar cell module system 1 of the present invention generally has: a reference module 2 which is a solar power generation module and its surface always remains in a clean condition; an evaluation module 3 which is a solar power generation module and its surface is covered by dust in a real environment; a data collecting element 4 configured to collect the data of power generation loss of the evaluation module 3 due to dust accumulation, calculate the power generation loss, and do a calculation of a time point of cleaning; and a display element 5 configured to display the time point of cleaning which is calculated by the data collecting element 4.

The method for determining a time point to clean a solar cell module according to the first embodiment of the present invention comprises: a step (S101) of calculating a power generation loss of the solar cell module in a time period due to dust accumulation; a step (S102) of converting the calculated power generation loss in the time period due to dust accumulation into a cost of power generation loss; a step (S103) of calculating a total cost of power generation loss which is equal to a cost of cleaning through the cost of power generation loss in the time period; and a step (S104) of determining the time point of cleaning from the total cost of power generation loss.

In the following, each step of the method according to the present invention will be described in detail. As shown in FIG. 1 and FIG. 2, in step S101, a time period (from beginning point T1 to terminal point TX) is decided first, in which a plurality of samples are taken to obtain a plurality of sampled data points. Then, each power loss for each of the plurality of sampled data points in the time period is calculated by subtracting the generation power of the evaluation module 3 for each sampled data point from the power generation power of the reference module 2 for each sampled data point. Next, a linear relationship between the time and power loss for all the sampled data points is acquired and the power loss a3 within the time period could be calculated by using the straight line Sr1 in relation to time and power loss, the power loss a1 at the beginning point T1 of the time period, and the power loss a2 at the terminal point TX of the time period.

In addition, the data of the above-mentioned sampled data points may be updated at predefined time point t by setting the display element 5. The predefined time point t to do the updating may be defined upon the length of a time period, e.g. every day, every week or every month.

In order to determine whether the power generation loss for the surface of the evaluation module 3 is due to dust accumulation or other factor, such as system being abnormal, a rain gauge 9 and a fine particle detector 10 may be further used for assisting the determination. In general, when the amount of fine particle detected by the fine particle detector 10 is larger, the power loss due to dust accumulation will increase. On the other hand, when the amount of rainfall detected by the rain gauge is larger, the surface of the solar generation module will be washed and become cleaner, so that the power loss due to dust accumulation would reduce. If not the cases stated above, the cause of power loss could be inferred as being different from dust accumulation. Therefore, it will be determined whether the system 1 or detecting elements, such as rain gauge 9 or fine particle detector 10, needs to be inspected.

Further, when the solar power generation power module is covered by dust, its efficacy for receiving thermal energy will be affected. Therefore, respective thermal sensors 7, 8 of the reference module 2 and the evaluation module 3 may be disposed to obtain the temperature difference between the reference module 2 and the evaluation module 3 to assist the determination of the situation of dust accumulation.

Then, in step S102, the calculated power generation loss a3 in the time period is converted into a loss cost L of the power generation loss a3 based on the unit power generation cost. For example, if the cost per kilowatt (kW) is NT$ 5 and the loss power in one day is 200kW, the cost of the loss power will be NT$ 1,000 (5*200=1,000).

Next, in step S103, the straight line Sr1 derived in step S101 in relation to time and loss power in the time period and the cost L of power generation loss in the time period is used to calculate the total cost L1 of power generation loss for the total power generation loss $a_{total}$, which is equal to the cost of cleaning.

Finally, in step S104, the total cost L1 of power generation loss calculated in step 103, and the straight line Sr1 in relation to time and power loss, which is calculated in Step S101, are introduced into the following equation (1) to determine the time point Fct to clean the solar cell module:

$$F_{ct} = \sqrt{2L1/Sr1} \qquad\qquad \text{equation (1)}$$

where

Fct: time point of cleaning;
L1: total cost of power generation loss; and
Sr1: straight line in relation to time and power loss.

The method for determining the time point to clean the solar cell module according to the first embodiment of the present invention may further comprise a step of cleaning. When the total cost L1 of the power generation loss is equal to the cost C of cleaning, the cleaning is performed. In order to perform this step, the solar cell module system 1 of the present invention may further have a cleaning system 6. The cleaning system 6, for example, has a cleaning device (not shown); a cleaning control element (not shown) configured to decide a cleaning area, procedure, and cleaning manner of the cleaning device so as to clean the solar cell module; and an action confirming element (not shown) which confirms the cleaning action via an image, a switching signal from the cleaning device or a value shown by the DC meter.

The cleaning device is disposed on the evaluation module 3 and may be any kind of physical cleaning device, such as spraying device, gas purge device, mechanical brushing head or scraper.

In addition, the method according to the first embodiment of the present invention for determining the time point to clean a solar cell module is not so limited to the above-described sampling manner for the solar cell module. For example, the time point of cleaning may also be determined based on the historical information about the power loss of the solar cell module due to average amount of sunshine in local and average dust accumulation.

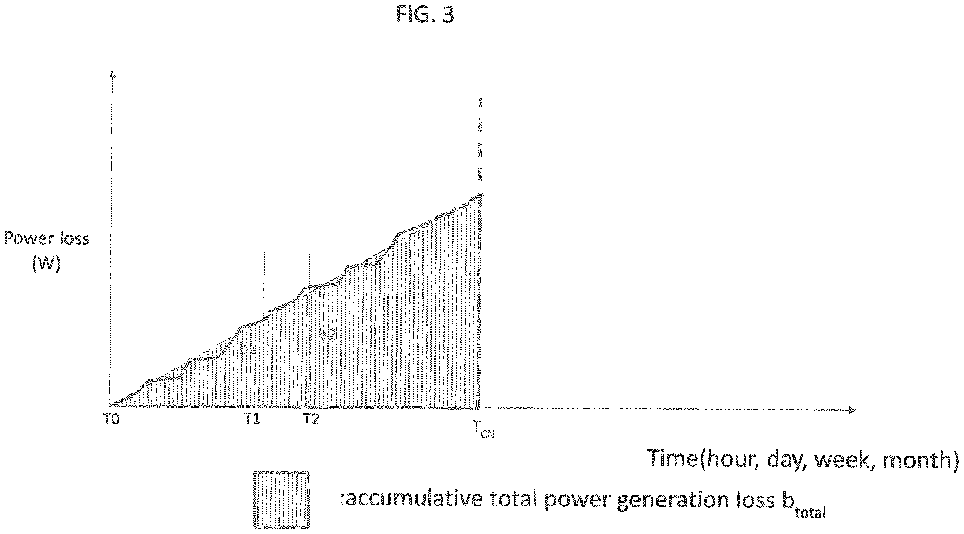

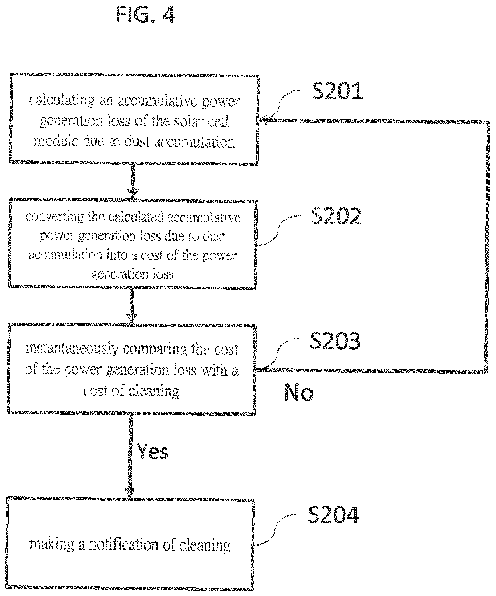

Further, the method according to a second embodiment of the present invention for determining the cleaning point of cleaning a solar cell module will be described below with reference to FIG. 3 and FIG. 4. FIG. 3 is a diagram illustrating the calculation method according to the second embodiment of the present invention for determining the time point to clean a solar cell module. The horizontal axis of FIG. 3 represents time and the vertical axis of FIG. 3 represents power loss. FIG. 4 is a flowchart showing the method according the second embodiment for determining the time point to clean the solar cell module.

The solar cell module system 1 using the method according to the second embodiment of the present invention for determining the time point to clean the solar cell module is identical to that used in the first embodiment described above and thus the description of such solar cell module system is omitted herein.

Referring to FIG. 4, the method according to the second embodiment of the present invention for determining the time point to clean a solar cell module comprises a step (S201) of calculating an accumulative power generation loss of the solar cell module due to dust accumulation; a step (S202) of converting the calculated accumulative power generation loss due to dust accumulation into a cost of the power generation loss; a step (S203) of instantaneously comparing the cost of the power generation loss with a cost of cleaning, wherein if the cost of the power generation loss is less than the cost of cleaning, the method will be back to the step (S201) of calculating the accumulative power generation loss of the solar cell module due to dust accumulation, and wherein if the cost of the power generation loss is equal to the cost of cleaning, the method will proceed with the next step; and a step (S204) of making a notification of cleaning.

First, in step S201, from the beginning time point (TO) where no power loss occurs, calculate the power generation loss of each sampled data point when taking each sample and then sum up the power generation losses of these sampled data points as the total power generation loss $b_{total}$. For example, at the sampled data point T1 obtaining its power generation loss b1, the total power generation power loss $b_{total}$ at the sampled data point T1 is $\sum_0 b1$. At the sampled data point T2 obtaining its power generation loss b2, the total power generation power loss $b_{total}$ at the sampled data point T2 is $\sum_0 b2$,

Then, in step S202, the total power generation loss $b_{total}$ summed up in step S201 is converted into a loss cost L2 based on the unit power generation cost. The converting manner is the same as step S102 of the first embodiment described above.

Next, in step S203, the total loss cost L2 of power generation loss is compared with a cost L of cleaning. If the total loss cost L2 of power generation loss is less than the cost C of cleaning, the method will be back to step S201 and again summing up the power generation loss of the sampled data points as the total power generation loss $b_{total}$ which is converted into a loss cost L2. If the total loss cost L2 of power generation loss is equal to the cost C of cleaning, the next step will be performed.

Finally, in step S204, since the cost L2 of power generation loss is equal to the cost C of cleaning, the cleaning notification is made at the time point $T_{CN}$.

As the method according to the first embodiment of the present invention for determining the time point to clean a solar cell module, the method according to the second embodiment for determining the time point to clean a solar cell module can also further comprise a step of cleaning. The step of cleaning is also the same as that in the first embodiment so that the detailed description thereof is omitted herein.

In addition to the reference module 2, evaluation module 3, data collecting element 4, display element 5, cleaning system 6, temperature sensors 7, 8, rain gauge 9 and fine particle detector 10, the solar cell module system 1 of the present invention may even have a solar cell module efficacy monitoring system or solar power generation monitoring system disclosed in the present applicant's TW patent publications Nos. TW 201350892 and TW 201414134. Furthermore, in addition to the structure disclosed by the aforesaid two patent applications, any other auxiliary element for assisting the power generation efficacy or monitoring efficacy of the solar cell module system 1 may also be added without departing from the spirit of the method according to the present invention for determining the time point to clean a solar cell module, i.e. when the total cost of power generation loss is equal to the cost of cleaning, it will be the most preferable time point to clean a solar cell module with economic benefits.

The method for determining the time point to clean a solar cell module and the solar cell module system using said method according to the present invention have been described above. However, the present invention is not so limited to this, and numerous variations of the present invention are possible within the scope of the appended claims. For example, once obtaining the total cost of power generation loss equal to the cost of cleaning, the time point of cleaning can be acquired in any manner.

According to the method of the present invention for determining the time point to clean a solar cell module and the solar cell module system using said method, the power loss of the solar cell module due to dust accumulation can be effectively avoided with economic benefits.

**Claims**

1. A method for determining a time point to clean a solar cell module, the method comprising the steps of:

   calculating a power generation loss of the solar cell module in a time period due to dust accumulation;
   converting the calculated power generation loss in the time period due to dust accumulation into a cost of the power generation loss;
   calculating a total cost of the power generation loss when it is equal to a cost of cleaning through the cost of the power generation loss in the time period; and

determining the time point of cleaning by referring to the total cost of the power generation loss.

2. The method of claim 1 for determining a time point to clean a solar cell module, wherein the step of calculating a power generation loss in a time period due to dust accumulation comprises deciding the time period and sampling in the time period to obtain a plurality of data points; and wherein the power generation loss in the time period is calculated by obtaining a straight line in relation to the time points and power loss for all sampled data points in the time period and then using the straight line and power losses at the beginning and terminal sampled data points in the time period.

3. The method of claim 1 or claim 2 for determining a time point to clean a solar cell module, wherein the time point is inferred by the following equation:

$$F_{ct} = \sqrt{2L1/Sr1}$$

where

Fct represents the time point of cleaning;
L1 represents the total cost of power generation loss; and
Sr1 represents the linear relationship.

4. A method for determining a time point to clean a solar cell module, the method comprising the steps of:

calculating an accumulative power generation loss of the solar cell module due to dust accumulation;
converting the calculated accumulative power generation loss due to dust accumulation into a cost of the power generation loss;
instantaneously comparing the cost of the power generation loss with a cost of cleaning; if the cost of the power generation loss being less than the cost of cleaning, then returning to the step of calculating the power generation loss of the solar cell module accumulated due to dust accumulation, and if the cost of the power generation loss being greater than the cost of cleaning, then proceeding with the next step; and
making a notification of cleaning.

5. The method of claim 4 for determining a time point to clean a solar cell module, wherein the step of calculating an accumulative power generation loss of the solar cell module due to dust accumulation begins where no power generation loss occurs, then calculates the power generation loss when taking each sampled data point, and sums up the power generation losses for all sampled data points as a total power generation loss.

6. The method of any of claims 1, 2, 4 and 5 for determining a time point to clean a solar cell module, wherein the step of converting the power generation loss into a cost of the power generation loss is based on the unit cost of power generation.

7. The method of any of claims 1, 2, 4 and 5 for determining a time point to clean a solar cell module, further comprising a step of cleaning which performs the cleaning when the total cost of power generation loss is equal to the cost of cleaning.

8. A solar cell module system, comprising:

a reference module comprising a solar power generation module, a surface of the reference module maintaining in a clean condition;
an evaluation module comprising a solar power generation module, a surface of the evaluation module being covered by dust in an real environment;
a data collecting element configured to collect the data of power generation loss of the evaluation module due to dust accumulation, calculate the power generation loss, and do a calculation of a time point of cleaning; and
a display element configured to display the time point of cleaning calculated by the data collecting element;
wherein the solar cell module system uses the method according to any of claims 1 to 7 for determining the time point to clean the solar cell module to determine the time point of cleaning.

9. The solar cell module system of claim 8, comprising a rain gauge configured to assist the determination of the power generation loss due to dust accumulation.

10. The solar cell module system of claim 8 or 9, comprising a fine particle detector configured to assist the determination of the power generation loss due to dust accumulation.

11. The solar cell module system of claim 8 or 9, further comprising a cleaning system configured to perform the cleaning when the total power generation loss is equal to the cost of cleaning.

12. The solar cell module system of claim 11, wherein the cleaning system at least comprises:

a cleaning device selected from one of a spraying device, gas purge device, mechanical brushing head and scraper; and
a cleaning control element configured to decide a cleaning area, procedure, cleaning manner for the cleaning device to perform the cleaning of the solar cell module.

EP 3 217 541 A1

FIG. 1

Power loss (W)

Sr1

a2

a1

T0

T1    t    Tx    Fct

Time(hour, day, week, month)

:power generation loss in a time period

: total power generation loss $a_{total}$

# FIG. 2

calculating a power generation loss of the solar cell module in a time period due to dust accumulation — S101

converting the calculated power generation loss in the time period due to dust accumulation into a cost of power generation loss — S102

calculating a total cost of power generation loss which is equal to a cost of cleaning through the cost of power generation loss in the time period — S103

determining the time point of cleaning from the total cost of power generation loss — S104

FIG. 3

Power loss (W)

T0    T1    T2    T_{CN}

Time(hour, day, week, month)

:accumulative total power generation loss $b_{total}$

EP 3 217 541 A1

## FIG. 4

calculating an accumulative power generation loss of the solar cell module due to dust accumulation — S201

↓

converting the calculated accumulative power generation loss due to dust accumulation into a cost of the power generation loss — S202

↓

instantaneously comparing the cost of the power generation loss with a cost of cleaning — S203

**No** →

↓ **Yes**

making a notification of cleaning — S204

FIG. 5

1

REFERENCE
MODULE

2

9

10

DISPLAY ELEMENT

5

7

DATA
COLLECTION
AND
ANAYSIS ELEMENT

4

8

EVALUATION
MODULE

3

6

CLEANING SYSTEM

EP 3 217 541 A1

# INTERNATIONAL SEARCH REPORT

| International application No. |
|---|
| **PCT/CN2016/071007** |

### A. CLASSIFICATION OF SUBJECT MATTER

H02S 50/00 (2014.01) i

According to International Patent Classification (IPC) or to both national classification and IPC

### B. FIELDS SEARCHED

Minimum documentation searched (classification system followed by classification symbols)

H02S; B08B

Documentation searched other than minimum documentation to the extent that such documents are included in the fields searched

Electronic data base consulted during the international search (name of data base and, where practicable, search terms used)

CNKI, CNPAT, WPI, EPODOC: solar energy, fallout, PV, solar, photovoltaic, clean, dust, power, loss, time, cost

### C. DOCUMENTS CONSIDERED TO BE RELEVANT

| Category* | Citation of document, with indication, where appropriate, of the relevant passages | Relevant to claim No. |
|---|---|---|
| X | CN 104868832 A (XI'AN UNIVERSITY OF TECHNOLOGY), 26 August 2015 (26.08.2015), description, paragraphs [0003]-[0110], and figures 1-5 | 1, 4-8, 11-12 |
| Y | CN 104868832 A (XI'AN UNIVERSITY OF TECHNOLOGY), 26 August 2015 (26.08.2015), description, paragraphs [0003]-[0110], and figures 1-5 | 9-10 |
| A | CN 104868832 A (XI'AN UNIVERSITY OF TECHNOLOGY), 26 August 2015 (26.08.2015), description, paragraphs [0003]-[0110], and figures 1-5 | 2-3 |
| X | CN 204597874 U (XI'AN UNIVERSITY OF TECHNOLOGY), 26 August 2015 (26.08.2015), description, paragraphs [0023]-[0028], and figures 1-3 | 1, 4-8, 11-12 |
| Y | CN 204597874 U (XI'AN UNIVERSITY OF TECHNOLOGY), 26 August 2015 (26.08.2015), description, paragraphs [0023]-[0028], and figures 1-3 | 9-10 |
| Y | CN 104170247 A (TOKYO ELECTRON LTD.), 26 November 2014 (26.11.2014), description, paragraph [0032], and figures 1-4 | 9-10 |

☐ Further documents are listed in the continuation of Box C. ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 September 2016 (30.09.2016) | **17 October 2016 (17.10.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Lu** Telephone No.: (86-10) **62089116** |

Form PCT/ISA/210 (second sheet) (July 2009)

## INTERNATIONAL SEARCH REPORT
### Information on patent family members

International application No.

**PCT/CN2016/071007**

| Patent Documents referred in the Report | Publication Date | Patent Family | Publication Date |
|---|---|---|---|
| CN 104868832 A | 26 August 2015 | None | |
| CN 204597874 U | 26 August 2015 | None | |
| CN 104170247 A | 26 November 2014 | US 2014375343 A1 | 25 December 2014 |
| | | JP 5671488 B2 | 18 February 2015 |
| | | US 9154075 B2 | 06 October 2015 |
| | | US 2015357973 A1 | 10 December 2015 |
| | | WO 2013136796 A1 | 19 September 2013 |
| | | JP 2013191719 A | 26 September 2013 |
| | | CN 104170247 B | 25 May 2016 |
| | | TW 201350892 A | 16 December 2013 |

Form PCT/ISA/210 (patent family annex) (July 2009)

**REFERENCES CITED IN THE DESCRIPTION**

**Patent documents cited in the description**

- TW 201350892

- TW 201414134